Europäisches Patentamt

(19) European Patent Office  (11) Publication number: **0 233 133**
Office européen des brevets  **B1**

(12) **EUROPEAN PATENT SPECIFICATION**

(45) Date of publication of the patent specification:
23.06.89

(51) Int. Cl.⁴: **B 62 B 7/08**

(21) Application number: **87500002.8**

(22) Date of filling: **23.01.87**

(54) **Foldable frame for children's push chairs.**

(30) Priority: **07.02.86 ES 292203**
**22.10.86 ES 8601059**

(43) Date of publication of application:
**19.08.87 Bulletin 87/34**

(45) Publication of the grant of the patent:
**23.06.89 Bulletin 89/34**

(84) Designated Contracting States:
**AT BE CH DE FR GB GR IT LI LU NL SE**

(56) References cited:
**EP-A-0 142 068**
**GB-A-928 040**
**GB-A-2 148 209**
**GB-A-2 149 359**
**US-A-4 529 219**
**US-A-4 632 421**

(73) Proprietor: **Jané S.A., Cartagena 203, E-08013**
**Barcelona (ES)**

(72) Inventor: **Jane Cabagnero, Ramón, c/o Jané S.A.**
**Cartagena 203, E-08013 Barcelona (ES)**

(74) Representative: **Pastells Teixido, Manuel, c/o**
**PASTELLS TEIXIDO, S.L. Pau Claris 138, 5-1a,**
**E-08009 Barcelona (ES)**

LIBER, STOCKHOLM 1989

## Description

This invention refers to a foldable frame for children's pushchairs.

There are various types of frames for children's pushchairs, with some offering a more compact folding than others, and also with different folding systems, with some being more complex and others simpler.

The frame which is the object of this invention is of the type in whose folding the handlebar, the back, the seat, the armrests, the rear legs and the front legs are juxtaposed, with the folding and unfolding actions being carried out by acting on the handlebar, by pushing downwards and forwards, and upwards and backwards respectively. Likewise as it happens in the children's pushchair being the object of USA patent nos. 4529219.

US-A-4 529 219 corresponds to the preamble of claim 1. The object of this frame is to simplify the general structure of the pushchair and, at the same time, to obtain a complete, comfortable pushchair for the small child, and one which is easy to fold and unfold.

In this type of children's pushchairs, on each side of the frame, the handlebar brace member is joined to the rear leg by means of an arm which extends downwards to where it joins a brace which is joined to the front leg at its other end. At its upper end, the front leg is joined to the front end of the rear leg where the latter is joined to a flat strip acting as arm rest, which is in turn joined to the intermediate zone of the handlebar brace member. The object of the invention is achieved according to the characterizing portion of claim 1.

In another realization of this frame for pushchairs, it is given a more complete armrest which gives greater comfort to the child and which determines a better finish in the pushchair, whose frame has, moreover, been fitted as known already with a two-position handlebar so that the pushchair can be pushed with the seat facing the direction it is going in or else facing the person pushing the pushchair, with the child then having his back to the direction he is going in, with the particular feature that the uncoupling of the handlebar is done manually without any difficulty, while the coupling at each one of its two positions is carried out automatically by merely tilting the handlebar forwards or backwards.

In this new frame, the rear joint of the armrest and of the bent arm is carried out in a rear section of the frame which substitutes the handlebar brace member, which is now joined at the lower part to the lower end of the mentioned section, with both the latter and front end of the armrest including pivots to which the handlebar brace member is coupled in both its positions characteristically by means of an elastic link which slides along the same and which has respective front and rear hooks.

The armrest is made up of a longitudinal box body housing a centre rib whose ends join into the upper end of the mentioned rear section and in that of the rear leg, at whose ends both parts are to be characteristically found jointly, and these parts, in the unfolding of the pushchair, block both openings of the arm rest, with the particular feature being that the rear part makes up the hood anchoring element, while a plate to which the front leg is joined and which in turn supports an element for the anchoring of the front handrail, is joined to the front part.

These and other characteristics will be better seen in the following detailed exposition which refers to some practical realizationcases which do not limit the scope of the invention, and which is accompanied by some diagrams so as to facilitate their being understood.

In the diagrams:

Figure 1 shows the assembly of this frame in lateral elevation, in its unfolded, use position, also in lateral elevation,

Figure 2 shows this frame in a semifolded position,

figure 3 is a front elevation detail of the strut which links the seat with the lower crosspiece of the front legs,

figure 4 shows the centre part of the frame, in lateral elevation, with the armrest cut lengthwise, corresponding to the realization with the handlebar in two positions,

figure 5 also shows this central part of this frame in lateral elevation, on a smaller scale, in a semifolded arrangement, and

figure 6 is a front elevation detail of the handlebar brace member with the engaging link shown in a cross-section.

This frame includes an inverted U handlebar fitted with a handle 1 in the upper zone and whose brace members 2, in their lower part 3, link with the intermediate zone 4 of the rear legs 5 by means of a bent arm 6 which is joined to a brace 7 which extends to join a flange 8 secured to the lower zone of the front legs 9 which are fitted with a couple of wheels 10, the same as the rear legs.

At their upper end 11, the front legs are joined to a flange 12 secured to the upper end of the rear legs 5 where the latter are eye-jointed to the intermediate part 13 of the handlebar brace members by means of an inversely bent rolled section 14 at its ends and which acts as an armrest.

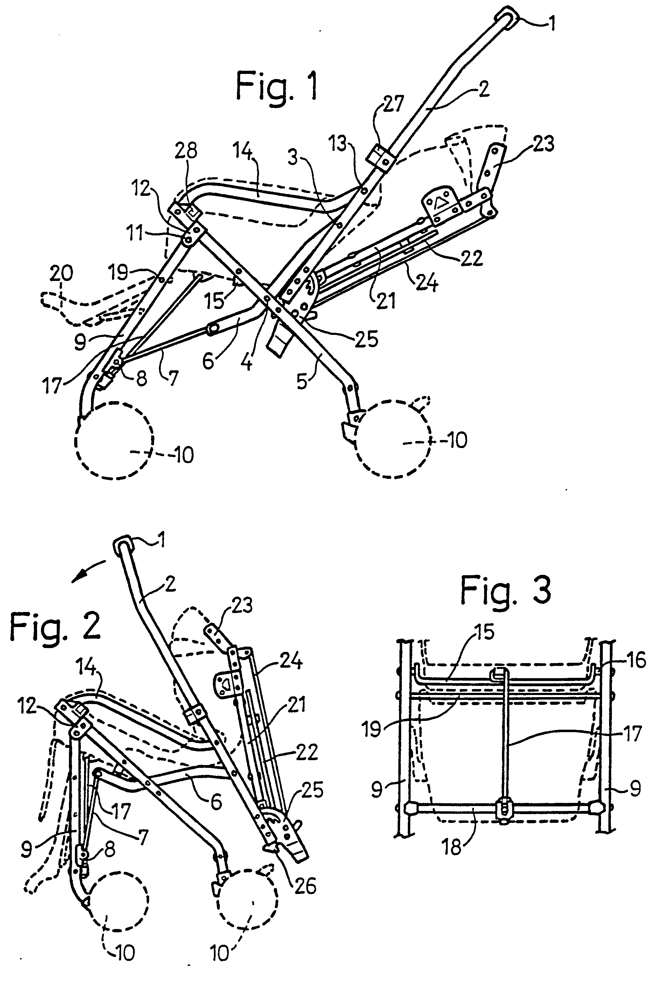

The bottom of the seat is made up of a plate 15 which is supported by a C-shaped section 15' joined by its ends 16 to a point 5' of the rear legs 5, whose plate is supported at its centre front part on a hinged strut 17 and which is connected at the lower part to a crosspiece 18 which connects at the lower part to the front legs 9 (Fig. 3).

The seat is supported in the front part on a crosspiece 19 connecting at the upper part to the front legs, whose crosspiece makes up the support axis for a footrest plate 20 which can take on different angles in accordance with the angles of the back which is supported by a frame whose side sections 21 join at their lower part the handlebar brace members and which include a device 22 for locking it at different angle positions, whose frame includes, in the upper part, a hinged complement 23 for making a head piece in the back, which in the back down position closes the upper part of the same by the action of some hinged braces 24 which are coupled at the lower part to both blocks 25 fixed to the handlebar brace members and which make up support feet for keeping the folded pushchair vertically.

On each side, the frame will have a locking pin 26 which will ensure the unfolded position of the pushchair by being coupled between two of its hinged elements, as for example between the block 25 and the rear leg 5, with another complementary locking pin being able to be added, for example, between the brace member of the handlebar 2 and the arm 6.

The pushchair can be complemented with other accessories such as a sunshade or a front handrail for which the frame is fitted with the corresponding couplings 27 and 28.

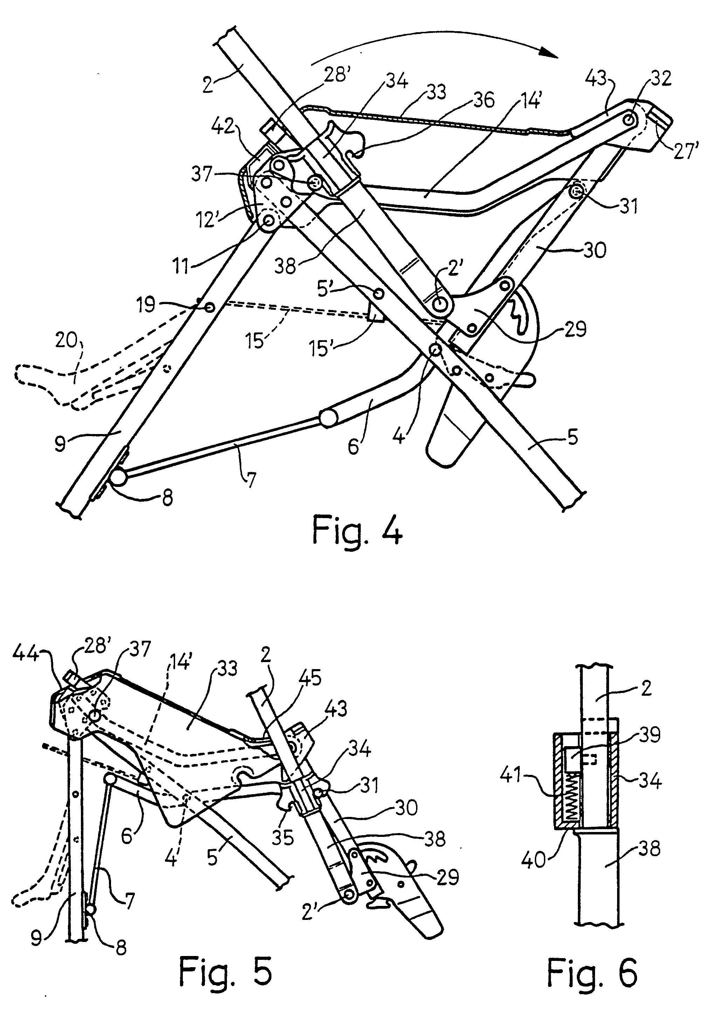

In accordance with the realization in figures 4, 5 and 6, the brace members 2 of the handlebar are joined at their lower end 2' to a small triangular plate 29 secured on a rear section 30, which is eye-jointed at an intermediate point 31 to the intermediate point 4 of the corresponding rear leg 5 by means of the bent arm 6.

At their upper end 11, the front legs are joined to a plate 12' fixed to the upper end of the rear legs 5, which through the mentioned plate are joined to the upper end 32 of the rear sections 30 by means of a bent rolled section 14' which makes up the centre rib of the armrest 33.

The brace members of the handlebar include the sliding assembly of both bushings 34 which constitute two opposite hooks 35 and 36, a front one and a rear one, which allows the handlebar to be set in two opposing positions, the front position (figure 4) and the rear position (figure 5), which are ensured on the fastening of the mentioned hooks respectively in a nose 37 envisaged laterally in the front end of the armrest 33 and in a nose made at the articulation point 31 of the rear section 30.

These bushings play vertically between two stopping dogs, a lower one made up of a point 38 of the brace members of the handlebar, and an upper one 39 anchored in the actual brace members of the handlebar, between whose stopping dog and a bottom 40 of the bushing there is a spring 41 (figure 6) which tends to push the bushings towards their lower active engaging position.

To change the handlebar from one position to another, it is sufficient to raise the mentioned bushings 34 by hand, disengaging them from the nose 37 or 31, and on then displacing the handlebar forwards or backwards the automatic coupling of the bushings in the corresponding nose will be obtained, the engaging of which is facilitated when the external oblique edge of the hooks 35 and 36 hit against the nose, with the consequent compression of the spring 41.

The armrest 33 is made up of a body moulded in plastic, as a longitudinal box open along its lower part, along which the centre rib-rolled section 14' is to be found, and at whose ends the parts 42 and 43 are secured and which in the unfolding of the pushchair block the respective openings 44 and 45 of the upper ends of the armrest, whose openings facilitate the play in the end joints of the mentioned centre rib-rolled section. On plate 12' an engaging part 28' is secured, and it projects through the opening 44 of the armrest where a front handrail (not represented) is coupled and can be removed, and the part 43 makes up a box with engaging outer tooth 27' for the coupling of a detachable hood.

## Claims

1. Foldable frame for children's pushchairs, of the type whose handlebar and back are juxtaposed when folding to the seat armrest, to the rear legs and to the front legs, the brace members (2) being joined on each side of the handlebar at their lower part (3) to the intermediate zone (4) of the rear wheel-holding legs (5) by means of a bent arm (6) which extends downwards and by means of a brace (7) is joined to the lower zone of the front legs (9), which are joined at their upper part (11) to a flange (12) secured in the upper part of the rear legs (5) which at their free end are eye-jointed to the brace members of the handlebar by means of a rolled section (14) constituting the armrest, this frame characterized in that the brace (7) is joined to the front legs (9) by means of a flange (8) positioned to said legs and in that the seat (15) is joined at its intermediate zone (15') to the rear legs (5) and at its centre front zone is eye-jointed by means of a strut (17) to a lower crosspiece (18) of the front legs (9), with the seat (15) being supported at its front zone on a crosspiece (19) envisaged in the upper zone of the mentioned legs (9), and making up the supporting shaft of a footrest plate (20).

2. Foldable frame for children's pushchairs, according to claim 1, characterized by the fact that the brace members (2) of the handlebar are joined at their lower part (2') to the lower end of a rear section (30) of the frame, by means of a small triangular plate (29) positioned to said rear section, with each one of the brace members (2) of the handlebar including a sliding bushing (34) which takes in both front (35) and rear (36) hooks for retaining the handlebar in the front position and in the rear position by the coupling of the mentioned hooks (35 and 36) in respective noses (37 and 31) envisaged, respectively, at the front end of the armrest (33) and in the mentioned rear section (30), with the particular feature that the mentioned sliding bushings (34) play between two stopping dogs (38 and 39) and are brought towards their lower active engaging position by the action of a spring (41) housed inside the bushings (34).

3. Foldable frame for children's pushchairs, according to claim 2, characterised by the fact that the armrest (33) is made up of a longitudinal boxtype body in which a centre rib (14') is housed, and at whose ends both parts (42 and 43) have been envisaged jointly, and in the unfolding of the frame, these parts block the respective openings (44 and 45) of the armrests (33), with the rear part (43) forming the anchoring element for the coupling of a hood and with the mentioned front part (42) being connected to the rear leg (5) together with a plate (12') on which the front leg (9) is joined and which supports the anchoring element (28') for the coupling of a front handrail.


**Patentansprüche**

1. Zusammenlegbares Gestell für Kindersportwagen, dessen Lenkstange und Rückenlehne beim Zusammenklappen neben Sitz, Armstützen sowie Hinter- und Vorderstangen zu liegen kommen. Die sich beidseitig der Lenkstange befindlichen Seitenstangen (2) sind in ihrem unteren Bereich (3) mit dem mittleren Bereich (4) der die Hinterräder tragenden Stangen (5) über einen nach unten verlaufenden gebogenen Arm (6) verbunden, der über eine Strebe (7) mit dem unteren Bereich der Vorderstangen (9) in Verbindung steht. Diese wiederum sind in ihrem oberen Bereich (11) an einen im oberen Bereich der Hinterstangen (5) verankerten Flansch (12) montiert, wobei diese an ihrem freien Ende über eine die Armstütze bildende Profilstange (14) mit den sich beidseitig der Lenkstange befindlichen Seitenstangen gelenkig verbunden sind. Dieses Gestell ist dadurch gekennzeichnet, dass die Strebe (7) über einen an den Vorderstangen (9) befindlichen Flansch (8) an besagte Stangen montiert ist und dass der Sitz (15) in einem mittleren Bereich (15') mit den Hinterstangen (5) verbunden und im Bereich Mitte vorn über eine Verstrebung (17) mit einem tiefer liegenden Querstab (18) der Vorderstangen (9) gelenkig verbunden ist. Der Sitz (15) liegt vorne auf einem im oberen Bereich besagter Stangen (9) vorgesehenen Querstab (19) auf, der einer Fusstütze (20) als Achse dient.

2. Zusammenlegbares Gestell für Kindersportwagen entsprechend Anspruch 1, dadurch gekennzeichnet, dass die sich beidseitig der Lenkstange befindlichen Seitenstangen (2) in ihrem unteren Bereich (2') über eine an einem rückwärtigen Bereich (30) des Gestells befindlichen dreieckigen kleinen Platte (29) mit diesem an seinem unteren Ende verbunden sind. Dabei umfasst jede der sich beidseitig der Lenkstange befindlichen Seitenstangen (2) je eine Gleitbuchse (34), die sowohl vordere (35) als auch hintere (36) Haken zur Aufnahme der Lenkstange in der vorderen und in der hinteren Position aufnimmt, wobei besagte Haken (35 und 36) in die entsprechenden, jeweils am vorderen Ende der Armstütze (33) und im besagten rückwärtigen Bereich (30) vorgesehenen Vorsprünge (37 und 31) eingreifen. Die genannten Gleitbuchsen (34) kennzeichnen sich ferner dadurch, dass sie sich frei zwischen zwei Anschlägen (38 und 39) bewegen und durch eine in diesen Buchsen (34) befindliche Feder (41) in ihre untere aktive Einhakposition gebracht werden.

3. Zusammenlegbares Gestell für Kindersportwagen entsprechend Anspruch 2, dadurch gekennzeichnet, dass die Armstütze (33) aus einem längsverlaufenden, kastenförmigen Gehäuse mit einer in dessen Mitte befindlichen Rippe (14') besteht, mit dessen Enden die Teile (42 und 43) fest verbunden sind. Beim Ausklappen des Gestells blockieren diese Teile die jeweiligen Öffnungen (44 und 45) der Armstütze (33), wobei das hintere Teil (43) die Verankerung zum Aufsetzen eines entsprechenden Verdecks bildet, wohingegen das vordere Teil (42) zusammen mit einer Platte (12') mit der Hinterstange (5) verbunden ist, die die Vorderstange (9) trägt und an der zugleich die Verankerung (28') für eine vordere Haltestange sitzt.


**Revendications**

1. Châssis pliant pour poussettes-landau, du type de ceux dont la poignée et le dossier se juxtaposent, lors du pliage, au siège et aux accoudoirs et aux pieds arrière et avant, les branches (2) de part et d'autre de la poignée s'articulant par leur partie inférieure (3) à la zone intermédiaire (4) des jambes porte-roues arrière (5) au moyen d'une entretoise (7), articulée à la partie inférieure des jambes avant (9), lesquelles s'articulent dans leur partie supérieure (11) à une bride (12) fixée dans la partie supérieure des jambes arrière (5) qui par leur bout libre sont raccordées d'une manière articulée aux branches de la poignée au moyen d'un profil laminé (14) constituant l'accoudoir, ce châssis étant caractérisé par ce que son entretoise (7) est articulée aux jambes avant (9) au moyen d'une bride (8) fixée à ces jambes, et par ce que le siège (15) s'articule par sa partie intermédiaire (15') aux jambes arrière (5) et par sa zone centrale avant est raccordé d'une manière articulée à l'aide d'un appui (17) à une traverse inférieure (18) des jambes avant (9), le siège (15) prenant assise par sa partie avant sur une traverse (19) prévue dans la partie supérieure des jambes avant (9) et qui constitue l'arbre-support d'une plaque repose-pieds (20).

2. Châssis pliant pour poussettes-landau suivant la revendication 1, caractérisé par ce que les branches (2) de la poignée s'articulent dans leur partie inférieure (2') au bout inférieur d'un tronçon arrière (30) du châssis au moyen d'une plaquette triangulaire (29), fixée à ce tronçon arrière, chaque branche (2) de la poignée intégrant une douille glissante (34) munie de deux crochets, l'un frontal (35), l'autre arrière (36), pour le maintien de la poignée en position avant et arrière par engagement desdits crochets (35 et 36) dans deux tétons (37 et 31), prévus respectivement à cet effet au bout avant de l'accoudoir (33) et dans le tronçon arrière (30) susdit, avec la particularité que les douilles glissantes (34) indiquées évoluent entre deux butées (38 et 39) et sont entraînées vers leur position inférieure active d'accrochage par l'action d'un ressort (41), logé à l'intérieur des douilles (34).

3. Châssis pliant pour poussettes-landau suivant la revendication 2, caractérisé par ce que l'accoudoir (33) est constitué par un corps sous forme de caisse longitudinale où loge un longeron central (14'), aux bouts duquels sont fixées solidairement les deux pièces (42 et 43). Lors du dépliage du châssis, ces pièces bouchent les respectives ouvertures (44 et 45) de l'accoudoir (33), la pièce arrière (43) formant l'élément de fixation pour l'accouplement d'une capote, étant reliée la pièce avant (42) susdite à la jambe arrière (5) conjointement avec une entretoise (12'), sur laquelle est articulée la jambe avant (9) et qui supporte l'élément de fixation (28') pour l'assemblage d'une barre d'appui frontale.

Fig. 1

Fig. 2

Fig. 3

Fig. 4

Fig. 5

Fig. 6